# EUROPÄISCHE PATENTSCHRIFT

(11) **EP 2 813 285 B1**
(45) Veröffentlichungstag und Bekanntmachung des Hinweises auf die Patenterteilung: **20.07.2016**
(21) Anmeldenummer: 14169820.9
(22) Anmeldetag: 26.05.2014
(51) Int. Cl.: B01J 8/18, C07F 7/16, B01J 8/28, B01J 8/00

(54) **Förderung von feinteiligen Feststoffen in der Synthese von Alkylchlorsilanen**
Conveying of fine solids in the synthesis of alkylchlorosilanes
Acheminement de matières solides à particules fines dans la synthèse d'alkylchlorosilanes

(30) Priorität: 13.06.2013 DE 102013211067
(43) Veröffentlichungstag der Anmeldung: 17.12.2014
(73) Patentinhaber: Wacker Chemie AG, 81737 München (DE)
(72) Erfinder: Mautner, Konrad, 84489 Burghausen (DE); Jochen, Groß, 84577 Tüßling (DE); Wüstenfeld, Till, 01589 Riesa (DE)
(74) Vertreter: Fritz, Helmut

(56) Entgegenhaltungen:
- EP-A1- 0 671 402
- WO-A1-01/44253
- DE-A1-102007 009 759
- GB-A- 2 432 331
- US-A- 2 389 931
- US-A1- 2010 150 668

## Beschreibung

Die Erfindung betrifft ein Verfahren zur pneumatischen Förderung von feinteiligen Feststoffen in der Direktsynthese von Alkylchlorsilanen mit Alkylchlorid als Fördergas.

Die pneumatische Förderung von Feststoffen, insbesondere feinteiligen Feststoffen, ist seit langem bekannt (z.B. Muschelknautz, E.; Wojahn, H., Chem.-Ing.-Technik, 46, 1974, 223-235) und wird immer dann genutzt, wenn eine hohe Anpassungsfähigkeit der Förderstrecken an die örtlichen Gegebenheiten notwendig ist, wenn eine umweltfreundliche, geschlossenen Förderung notwendig ist und wenn eine hohe Flexibilität der Verteilungsmöglichkeiten z.B. über Rohrweichen gefordert ist. Die pneumatische Förderung zeichnet sich auch durch geringen Instandhaltungsaufwand aus. Und nicht zuletzt bietet die pneumatische Förderung die Möglichkeit, luftempfindliche Stoffe unter Schutzatmosphäre zu handhaben.

Für die pneumatische Förderung verwendet man üblicherweise Gase wie Luft oder Stickstoff (siehe auch W. Siegel, Pneumatische Förderung, Vogel Buchverlag, Würzburg, 1991, S. 71-72), Insbesondere wenn brennbare Stoffe beteiligt sind, werden inerte Gase wie Stickstoff oder auch Argon verwendet.

In der Direktsynthese von Alkylchlorsilanen werden feinteilige Feststoffe oder Feststoffgemische eingesetzt, z.B. Si, Katalysatoren oder das Gemisch daraus, auch als Kontaktmasse bezeichnet. Bei der Reaktion fällt verbrauchte Kontaktmasse an, die neben Si deutlich erhöhte Anteile an Katalysatoren, Promotoren und Nebenelemente des eingesetzten metallurgischen Siliciums aufweist. Die Direktsynthese von Alkylchlorsilanen ist beispielsweise in EP 671402 A beschrieben. Si-Körner, Kontaktmasse und verbrauchte Kontaktmasse werden pneumatisch in Behälter und Reaktoren der Alkylchlorsilan-Synthese gefördert.

Gegenstand der Erfindung ist ein Verfahren zur pneumatischen Förderung von feinteiligen Feststoffen in der Direktsynthese von Alkylchlorsilanen, bei dem als Fördergas ein mindestens 50 Vol.-% Alkylchlorid haltiges Gas eingesetzt wird, wobei die eingesetzten pulvrigen Feststoffe zum Reaktor und die nach der Reaktion verbleibenden pulvrigen Feststoffe vom Reaktor weg durch pneumatische Förderung transportiert werden.

In der Direktsynthese von Alkylchlorsilanen werden Alkylchlorsilane, Silicium, Cu-Katalysatoren und Promotoren, z.B. Zn, Sn, Al und P in elementarer Form oder auch in Form von Verbindungen eingesetzt. Bevorzugt wird dabei ein Wirbelschichtreaktor eingesetzt. Für die Umsetzung in einem Wirbelschichtreaktor müssen die eingesetzten Rohstoffe fluidisierbar sein. Je nach Gasgeschwindigkeit des eingesetzten Reaktionsgases sollte deshalb die Partikelgröße im Mittel bevorzugt 1 - 500 µm, insbesondere 2 -200 µm betragen. Zur Aufrechterhaltung von bestimmten Konzentrationsprofilen der Nebenelemente, der Katalysatoren oder Promotoren bei kontinuierlich oder quasi-kontinuierlich betriebenen Reaktoren wird vorzugsweise kontinuierlich oder diskontinuierlich ein Teilstrom aus dem Reaktor abgezogen. Das kann auch zusammen mit dem gasförmigen Reaktionsprodukt erfolgen. Auch beim Abfahren von Reaktoren fällt verbrauchte Kontaktmasse an.

Die eingesetzten pulvrigen Feststoffe, insbesondere Silicium, Cu-Katalysatoren und Promotoren müssen zum Reaktor und die nach der Reaktion verbleibenden pulvrigen Feststoffe müssen vom Reaktor weg transportiert werden. Das geschieht durch Alle vorstehenden Symbole der vorstehenden Formeln weisen ihre Bedeutungen jeweils unabhängig voneinander auf. Soweit nicht anders erwähnt sind alle Drücke 0,10 MPa (abs.) und alle Temperaturen 20°C.

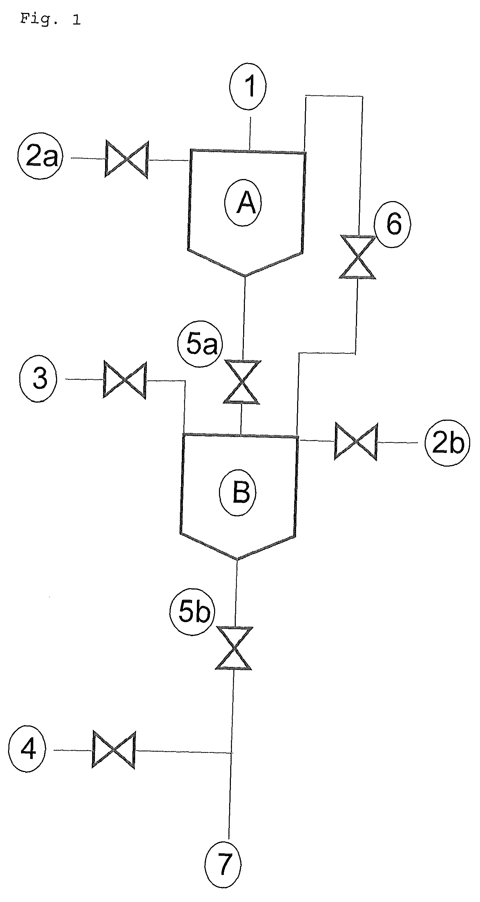

## Patentansprüche

1. Verfahren zur pneumatischen Förderung von feinteiligen Feststoffen in der Direktsynthese von Alkylchlorsilanen, bei dem als Fördergas ein mindestens 50 Vol.-% Alkylchlorid haltiges Gas eingesetzt wird, wobei die eingesetzten pulvrigen Feststoffe zum Reaktor und die nach der Reaktion verbleibenden pulvrigen Feststoffe vom Reaktor weg durch pneumatische Förderung transportiert werden.

2. Verfahren nach Anspruch 1, bei dem Methylchlorsilane synthetisiert werden und als Fördergas ein mindestens 50 Vol.-% Methylchlorid haltiges Gas eingesetzt wird.

3. Verfahren nach einem der vorangehenden Ansprüche, bei dem der Gehalt an Alkylchlorid im Fördergas mindestens 85 Vol.-% beträgt.

4. Verfahren nach einem der vorangehenden Ansprüche, bei dem die Gasgeschwindigkeit 5 m/s bis 40 m/s beträgt.

5. Verfahren nach einem der vorangehenden Ansprüche, bei dem das Druckgefälle bei 0,1 bis 2,5 bar/100 m liegt.

## Claims

1. Method for pneumatic conveying of fine solids in the direct synthesis of alkylchlorosilanes, in which the conveying gas used is a gas containing at least 50% by volume of alkyl chloride, wherein the pulverulent solids used are transported to the reactor and the pulverulent solids remaining after the reaction are transported away from the reactor by pneumatic conveying.

2. Method according to Claim 1, in which methylchlorosilanes are synthesized and the conveying gas used is a gas containing at least 50% by volume of methyl chloride.

3. Method according to either of the preceding claims, in which the alkyl chloride content in the conveying gas is at least 85% by volume.

4. Method according to any of the preceding claims, in which the gas velocity is 5 m/s to 40 m/s.

5. Method according to any of the preceding claims, in which the pressure drop is 0.1 to 2.5 bar/100 m.

## Revendications

1. Procédé de transport pneumatique de solides finement divisés dans la synthèse directe d'alkylchlorosilanes, dans lequel un gaz contenant au moins 50 % en volume de chlorure d'alkyle est utilisé en tant que gaz de transport, les solides pulvérulents utilisés étant transportés dans le réacteur et les solides pulvérulents restants après la réaction étant déchargés du réacteur par transport pneumatique.

2. Procédé selon la revendication 1, dans lequel des méthylchlorosilanes sont synthétisés et un gaz contenant au moins 50 % en volume de chlorure de méthyle est utilisé en tant que gaz de transport.

3. Procédé selon l'une quelconque des revendications précédentes, dans lequel la teneur en chlorure d'alkyle dans le gaz de transport est d'au moins 85 % en volume.

4. Procédé selon l'une quelconque des revendications précédentes, dans lequel la vitesse du gaz est de 5 m/s à 40 m/s.

5. Procédé selon l'une quelconque des revendications précédentes, dans lequel le gradient de pression est de 0,1 à 2,5 bar/100 m.
